# EUROPEAN PATENT APPLICATION

(11) **EP 0 805 576 A2**
(43) Date of publication of application: **05.11.1997**
(21) Application number: 97302818.6
(22) Date of filing: 24.04.1997
(51) Int. Cl.: H04L 12/18, H04L 12/64

(54) **Multi-party communications**

(30) Priority: 01.05.1996 GB 9609148
(71) Applicant: GPT LIMITED, Coventry, CV3 1HJ (GB)
(72) Inventor: Elwell, John, Robert, West Bridgford, Nottingham NG2 6LT (GB); Drage, Keith, Edmund, The Meadows, Nottingham NG2 2LA (GB)
(74) Representative: Branfield, Henry Anthony

(57) **Abstract**

A multi-party communication in a telecommunications network, sometimes termed a conference call, is set up between a plurality of parties in different locations using a signalling protocol which is independent of the bearer connections between those parties. The bearer connections carry various media (e.g. audio, video, data) between the parties, who individually may have access to some or all of the total set of media in use in the conference call, and each medium may utilise a different topography of bearer connections. By providing for the conference call a signalling protocol which is independent of bearer connections and of the signalling protocols used to establish those connections, the conference call can be established, controlled and finally terminated in a manner that is independent of the topology of any of the media involved.

## Description

A multi-party communication in a telecommunications network, sometimes termed a conference call, is set up between a plurality of parties in different locations using a signalling protocol which is independent of the bearer connections between those parties. The bearer connections carry various media (e.g. audio, video, data) between the parties, who individually may have access to some or all of the total set of media in use in the conference call, and each medium may utilise a different topography of bearer connections. By providing for the conference call a signalling protocol which is independent of bearer connections and of the signalling protocols used to establish those connections, the conference call can be established, controlled and finally terminated in a manner that is independent of the topology of any of the media involved.

Although multi-party communication (conference call) has been available in narrowband communication networks for some time, primarily for speech, human-factor difficulties resulting from the use of only a single medium have tended to inhibit the use of the service, particularly above three or four parties. Multi-media communication goes a long way towards removing or easing these difficulties. Asynchronous Transfer Mode (ATM) is a suitable infrastructure for taking multi-media communication to the desktop or to the home and is therefore likely to act as a catalyst for a substantial increase in conferencing.

A conference call is an association between an arbitrary number of users of a telecommunication network (or set of interconnected telecommunication networks) for the purpose of mutual communication. Within the scope of a conference call, one or more media may be used for information transmission between the participating users (parties). Examples of media are audio, video and data. For each medium, each party may be able to transmit and receive information, transmit only, receive only, or be a non-participant in that medium (in which case the party need not be aware of the participation of other parties in that medium).

According to the present invention, a multi-media conferencing system includes a plurality of user ports switchably interconnected via bearer connections to form a communication network, and a signalling protocol operative between said user ports and a conference control entity to control the bearer connection independently of the topography of the individual bearer connections.

Normally a party control agent would be associated with each user port.

Preferably means are provided by which party control agents and the conference control entity can control the establishment and release of individual bearer connections utilising a topography which is dependent upon the availability of replication and/or combing functions.

Preferably again the replication and/or combining functions are located remotely from the conference control entity and party control agents.

Each medium requires a bearer connection between the participating users. The bearer connection requires replication functions if more than one party is a receiver of the medium. The bearer connection requires combining functions if more than one party is a transmitter of the medium. When more than one party is a receiver and more than one party is a transmitter, both replication and combining functions are required. Replication and combining functions for a given bearer connection may or may not be collocated.

Furthermore, for a given bearer connection, replication and/or combining functions can be centralised at one node of the network (e.g. a conventional audio conference bridge) or can be distributed through different nodes of the network and/or the terminals of the parties involved.

As a result of the above considerations, different media within the same conference can have different bearer connection topologies.

In order to coordinate the parties in a conference and their participation in the various media involved, call control signalling takes place between the parties and the network and between network nodes. This signalling is separate from the signalling used to control the individual bearer connections. This control signalling topology can be symmetrical, since all parties in the conference are intrinsically equal (apart from any artificial limitations that might give certain privileges only to certain parties). The most appropriate symmetrical topology is a star, with a central conference control entity located in one of the nodes of the network.

Such a central conference control entity manages the control of bearer connections. In particular, where a bearer connection has centralised replication and/or combining functions, a bearer control entity will exist at the node where these functions exist.

The present invention will now be described by way of example, with reference to the accompanying drawings, in which:-
Figure 1 shows an example of a four-party multimedia conference;
Figure 2 shows an illustration of a medium for a multimedia conference having three participants with centralised replication/combining functions;
Figure 3 shows an illustration of a medium for a multimedia conference having three participants with replication/combining functions in terminal equipments;
Figure 4 shows a generalised topology for a medium for a multimedia conference having three participants with replication functions collocated with combining functions;
Figure 5 shows a generalised topology for a medium for a multimedia conference having three participants with separately located replication and combining functions;
Figure 6 shows an example of a point-to-multipoint bearer;
Figure 7 shows a generalised topology for a medium for a multimedia conference having three participants when point-to-multipoint bearers are used;
Figure 8 shows a multimedia conference call control architecture;
Figure 9 shows a conference call control entity located in a terminal;
Figure 10 shows an example of call control and bearers in support of a single medium;
Figure 11 shows bearer coordination where only point-to-point bearers are used;
Figure 12 shows bearer coordination where point-to-multipoint bearers are used;
Figure 13 shows bearer coordination where replication functions are collocated with combining functions;
Figure 14 shows bearer coordination where all replication/combining functions are collocated; and
Figure 15 shows bearer coordination where all replication/combining functions are located in terminal equipments.

### Example 1.

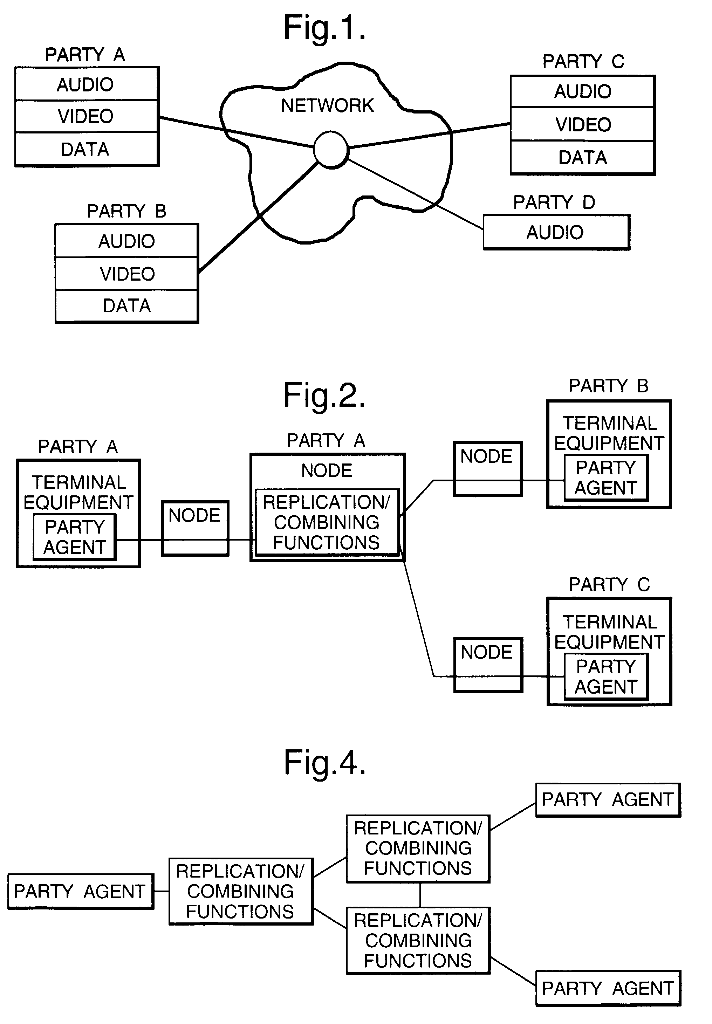

Three or more users participate in a video conference involving separate audio and video media. Each party receives audio and video streams from each of the other parties. The audio streams received by a party are combined in some way (e.g. by simple addition) and the video streams are either combined in some way (for display as a single entity) or kept separate. If there is a party without video capability, that party will just receive audio streams from the other parties and the other parties will receive only an audio stream from that party. The parties may also participate in data communication. Figure 1 illustrates a four party multimedia conference call in which party D participates only in voice.

### Example 2.

In the example above, if two parties wish to hold an audio conversation in private, but still within the context of the conference, an additional audio medium can be created in which only those two parties participate. The two parties can be disconnected from the audio medium in which the other parties are involved.

### Example 3.

A number of users receive an audio/video broadcast. Audio and video media are transmitted from a single source (which acts as one party in the conference) and are received by the other users.

### Example 4.

This is a combination of examples 1 and 3. Two or more users receiving an audio/video broadcast also communicate with each other in order to discuss the broadcast. Each user receives audio and video streams from each of the other users (including the broadcast source), whereas the broadcast source transmits only.

A user of a telecommunication network accesses that network through a terminal equipment attached to the network through some wired or wireless (e.g. radio) means. Within a terminal equipment there is assumed to be functionality that acts on behalf of that user for the purpose of controlling calls (including conference calls) in which that user is involved and controlling and terminating the bearer connections supporting the media by which that user participates in those calls. This functionality is referred to here as a party agent. Signalling between the party agents of those parties involved in a conference call and relevant entities within the network is used to achieve control of the conference call and the control of the bearers in support of the media involved in that conference call.

In considering a particular medium involved in a conference call, a party that transmits that medium to two or more other parties requires functionality for replicating information. For example, in an ATM network, this might be achieved by replicating cells, whereby each cell transmitted by a party is copied to each of the parties needing to receive that medium.

Similarly, a party that receives a medium from two or more other parties requires functionality for combining information. The way this is achieved will depend on the particular medium. For audio, for example, it might be achieved by adding together audio samples from the different sources, thereby superimposing the different audio signals.

Where a medium is received by more than one party and transmitted by more than one party, both replication and combining functions are required for that medium.

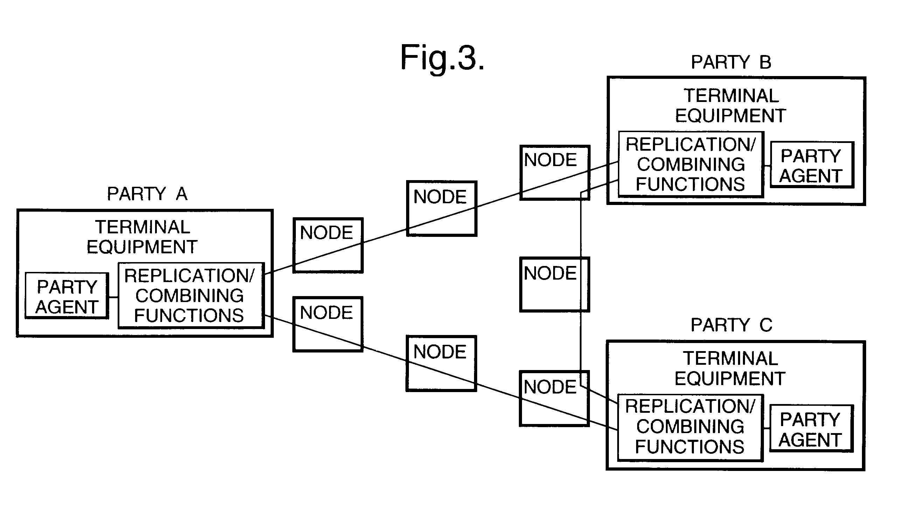

For a given bearer connection, replication and/or combining functions can be centralised at one node of the network (e.g. a conventional audio conference bridge) or can be distributed in various ways through different nodes of the network and/or the terminals of the parties involved. Figure 2 shows an example of a medium with three participants where for each party there are local replication/combining functions in the terminal equipment. In figures 2 and 3, each line represents bidirectional transmission of information. Other topologies are possible between these two extremes. The particular scheme chosen for a given medium in a given conference will depend on the requirements of the medium and the availability of replication and combining functions in terminal equipments and network nodes, taking into account also the desirability of keeping bandwidth utilisation within the network to a minimum, particularly when long distances are involved.

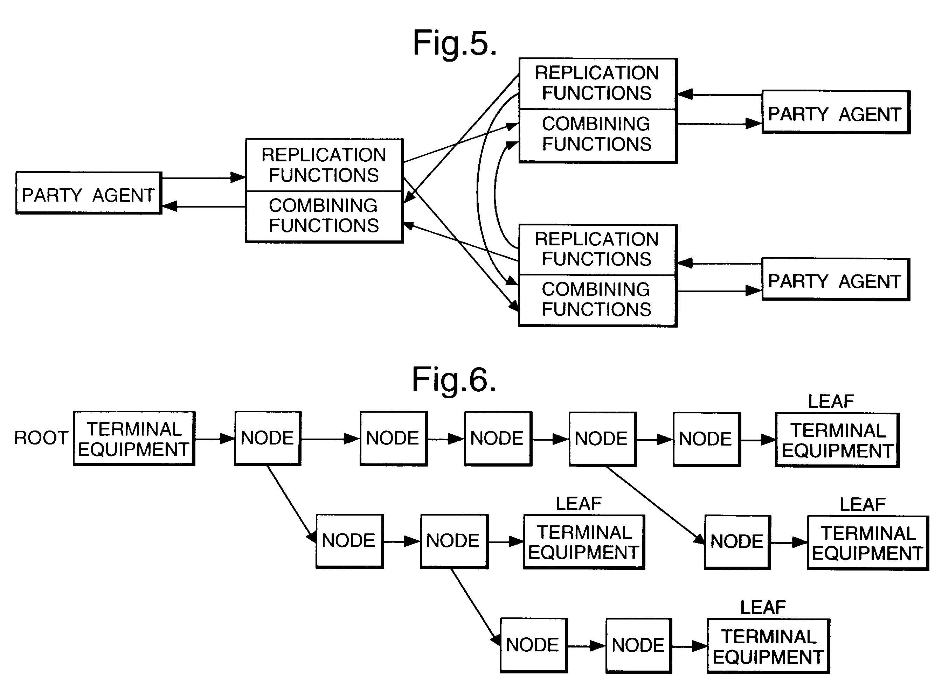

Figure 4 shows a generalised topology for a three party conference with replication functions on behalf of a given party collocated with the corresponding combining functions. The topology shown in figure 2 corresponds to the special case of the generalised topology of figure 4 where the replication/combining functions are located in the terminal equipments. The topology shown in figure 3 corresponds to the special case of the generalised topology of figure 4 where the replication/combining functions are all located in the same network node.

Replication and combining functions need not be collocated with each other. Figure 5 shows a further generalisation of the generalised topology shown in figure 4 with separately located replication and combining functions. The topology shown in figure 4 is in fact that topology shown in figure 5 simplified for the special case where replication functions are collocated with combining functions. In figure 5 each line represents unidirectional transmission of user information in the direction indicated by the arrow-head.

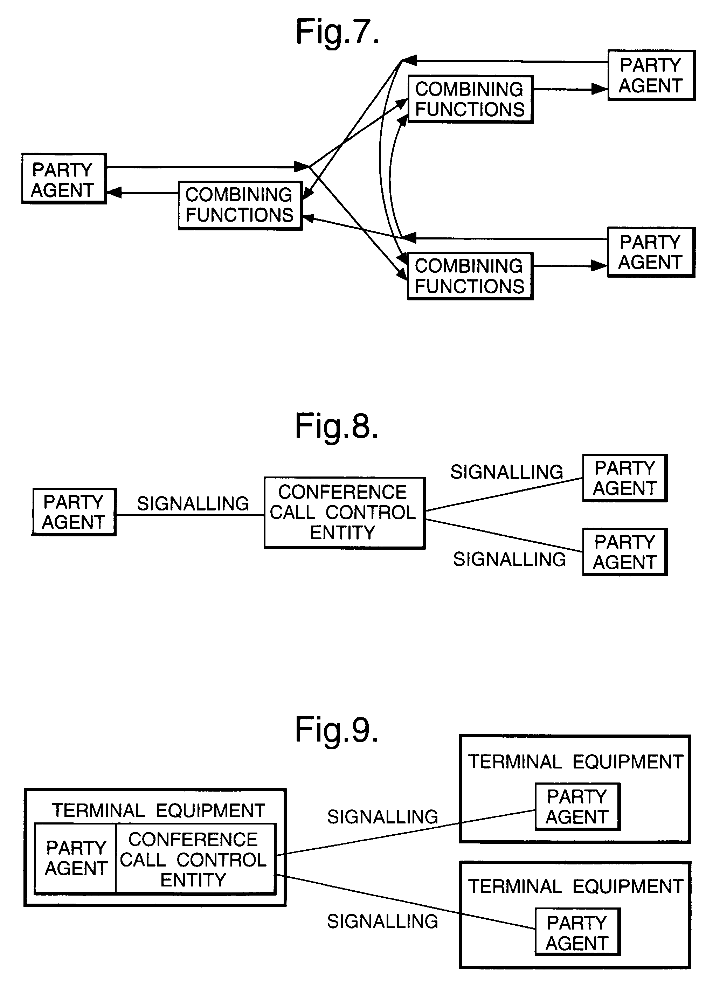

Furthermore, replication of media information from a given party can be distributed throughout the network in such a way as to optimise transmission bandwidth requirements, as illustrated by the example in figure 6. This is possible if the network supports unidirectional point-to-multipoint bearer capabilities, as is sometimes the case with ATM networks, for example. The generalised topology of figure 5 is then modified as shown in figure 7.

As a result of the above considerations, different media within the same conference can have different bearer connection topologies.

Signalling is required between party agents and bearer control entities within the network and also between bearer control entities within the network to control the establishment and release of bearer connections in support of media. A bearer control entity is assumed to exist at each network node along the path of a bearer connection and bearer control signalling occurs between pair or adjacent nodes along that path. Thus bearer control signalling follows the same path as its bearer connection and for clarity is now shown separately in the figures. In some types of network (e.g. ATM networks that support only point-to-point bearer capability) bearer control signalling is only capable of controlling point-to-point bearers. In these networks bearer control signalling is not capable of controlling multipoint-to-multipoint bearers requiring replication and combining functions. It is, however, able to control point-to-point bearers between the replication functions, the combining functions and the party agents. Some means is required of controlling the replication functions, combining functions and party agents so that they can participate in the control of the point-to-point bearers that join them together. This means of control is referred to here as bearer coordination.

The situation is similar for a network that supports unidirectional point-to-multipoint bearer capability. However, in this case bearer control signalling is capable of controlling unidirectional point-to-multipoint bearers, and therefore no separate bearer coordination is required at the various replication points that are distributed throughout the network. Coordination is needed only at the endpoints (root and leaves) of each point-to-multipoint bearer and at the end-points of any point-to-point bearers, i.e. at the terminal equipments and combining functions.

Certain functions involved in the control of a conference call relate to the control of the conference call as a whole rather than the control of the bearers required in support of individual media. This is known as call control, as opposed to bearer control. Functions of call control include, for example:
- establishment of the call between the initial two or more parties;
- adding further parties during the call (e.g. on request of an existing party);
- dropping parties from the call (e.g. on request of that party or another party);
- terminating the call;
- replacing parties during a call;
- achieving agreement between parties on addition of media;
- achieving agreement between parties on participation in particular media;
- achieving agreement between parties on removal of media;
- filtering requests from parties according to party entitlements;
- resolving conflicting requests from different parties;
- bearer coordination on behalf of the various media.

To resolve conflicts between parties, a common reference call control entity is required, distinct from the individual party agents. To achieve conference call control, call control signalling is required between the individual party agents and the conference control entity. This conference call control architecture is shown in figure 8, where the lines linking the entities represent call control signalling. This call control architecture is independent of the topology of the bearer connections supporting any of the media used by the call. Although the party agents are assumed to be located in the terminal equipments of the parties concerned, the conference call entity can be located either in a network node or in the terminal equipment of one of the parties. In the latter case the conference call control entity will be collocated with one of the party agents, and signalling between the two will be realised by internal means within the terminal equipment, as shown in figure 9.

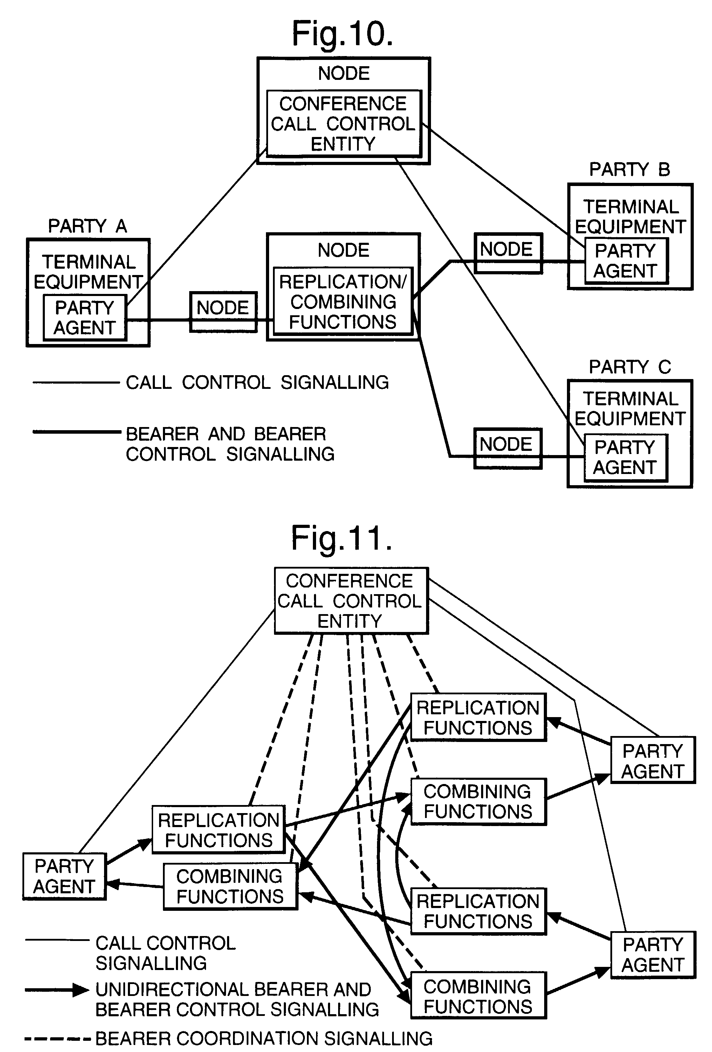

Figure 10 shows an example of call control for a three party conference call (with the conference call control entity located in a network node) and bearers in support of a single medium using centralised replication/combining functions. Note the distinction between call control signalling (between the party agents and the conference call control entity) and bearer control signalling (along the paths of the bearers).

Notwithstanding the fact that the conference call control entity can be located in one of the terminal equipments, the call control architecture is symmetrical, reflecting the fact that all parties in the conference are intrinsically equal (apart from any artificial limitations that might give certain privileges only to certain parties).

The conference call control entity is responsible for bearer coordination. For each medium, the conference control entity knows the parties that are to be involved, which parties are to receive only, which parties are to transmit only, and which parties are to transmit and receive. From knowledge of where appropriate replication and combining functions for the medium concerned can be provided (in terminal equipments or in particular network nodes) and knowledge of whether unidirectional point-to-multipoint bearers can be used to achieve replication, the conference call control entity can devise a suitable bearer connection topology. By communicating with the replication functions, the combining call control entity can issue instructions for the establishment and release of the necessary bearers.

Figure 11 shows the conference call control architecture of figure 8 superimposed onto the generalised bearer topology of figure 5. Bearer coordination signalling occurs between the conference call control entity and each of the party agents, between the conference call control entity and each of the replication functions, and between the conference call control entity and each of the combining functions. Bearer coordination signalling can cause the establishment of a unidirectional point-to-point bearer from each party agent to its corresponding replication function (for transmission of information by the party), from each replication function to each combining function and from each combining function to its corresponding party agent (for reception of information by the party).

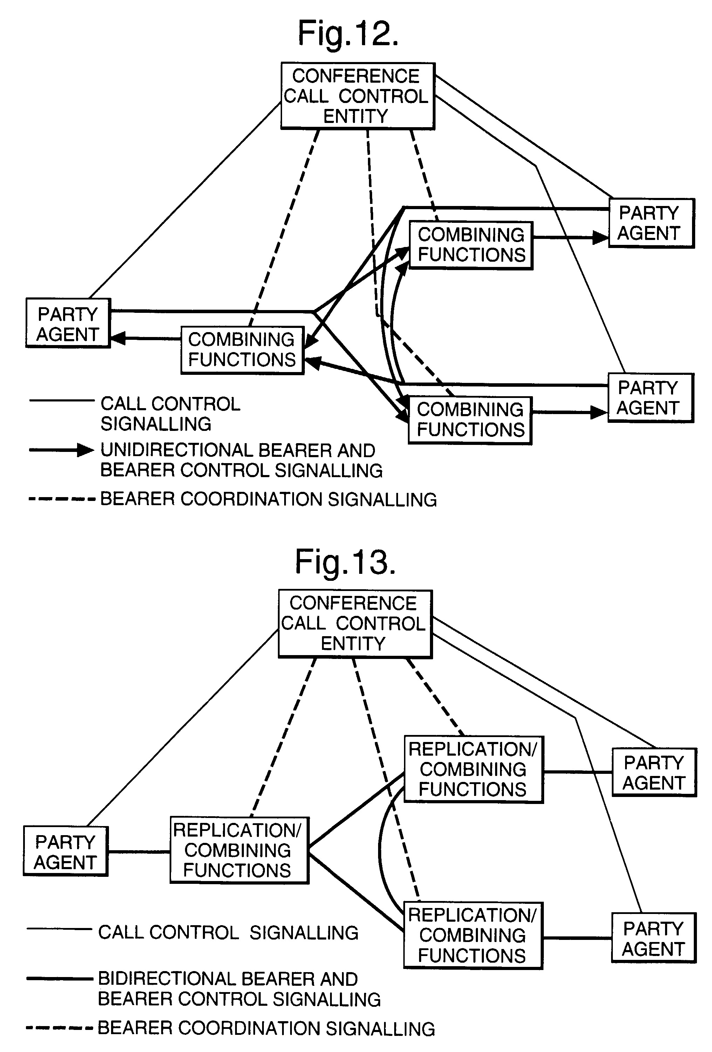

If use is made of a unidirectional point-to-multipoint bearer capability in the network, replication is achieved within the bearer and no separate replication functions are needed. This case is shown in figure 12. Bearer coordination signalling occurs between the conference call control entity and each of the party agents and between the conference call control entity and each of the combining functions. Bearer coordination signalling can cause the establishment of a unidirectional point-to-multipoint bearer from each party agent to each combining function (for transmission of information by the party) and from each combining function to its corresponding party agent (for reception of information by the party).

Bearer coordination signalling requires a signalling protocol if the two entities involved are located in different physical equipments, i.e. in two terminal equipments, in two different network nodes or in a terminal equipment and a network node. In certain cases the two entities involved can be collocated, in which case signalling is achieved internally to the equipment concerned and does not necessarily require a protocol.

Although figures 11 and 12 show the general cases, a simplified situation occurs if the replication and combining functions of figure 11 are collocated. This situation is shown in figure 13. Bearer coordination signalling occurs between the conference call control entity and each of the party agents and between the conference call entity and each of the replication/combining functions. Bearer coordination signalling can cause the establishment of a bidirectional point-to-point bearer from each party agent to its corresponding replication/combing function and from each replication/combining function to its corresponding party agent.

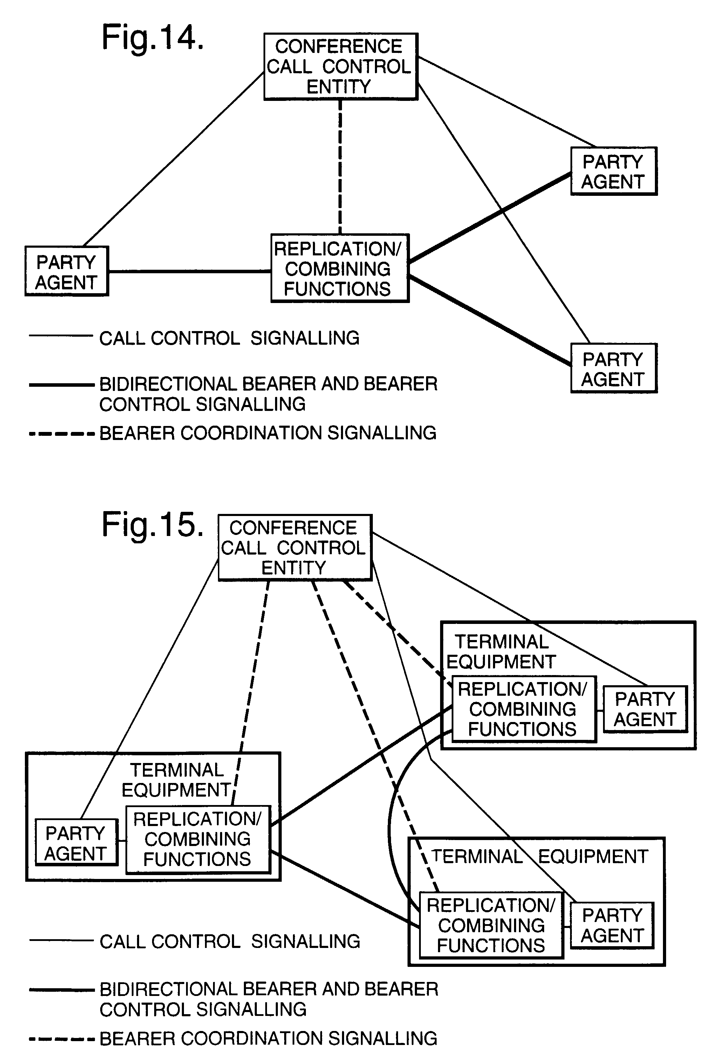

Figure 14 shows the special case where all the replication/combining functions of figure 13 are collocated (as, for example, with a conventional audio conference bridge). Bearer coordination signalling occurs between the conference call control entity and each of the party agents and between the conference call control entity and the replication/combining functions. Bearer coordination signalling can cause the establishment of a bidirectional point-to-point bearer from each party agent to the central replication/combining functions.

Figure 15 shows the special case where all the replication/combining functions of figure 13 are located in the terminal equipments (collocated with the party agents). Bearer coordination signalling occurs between the conference call control entity and each of the party agents/replication/combining functions. Bearer coordination signalling can cause the establishment of a bidirectional point-to-point bearer between each pair of terminal equipments.

A particular innovative aspect of this invention is the concept of a bearer coordination signalling protocol designed for the general cases as shown in figures 11 and 12, that signalling protocol also being suitable for use in more specific situations, including those shown in figures 13, 14 and 15. Examples of the capabilities required of this signalling protocol include:
- the ability to assign a replication/combining equipment (for performing replication functions, combining functions or replication/combining functions) to a call for use by a particular medium;
- the ability to cause a party agent to establish a bidirectional or unidirectional bearer to a replication/combining equipment or vice versa;
- the ability to cause a replication/combining equipment to establish a bidirectional or unidirectional bearer to another replication/combining equipment;
- the ability to cause the removal of a bearer between a party agent and a replication/combining equipment;
- the ability to cause the removal of a bearer between two replication/combining equipments;
- the ability to release a replication/combining equipment.

## Claims

1. A multi-media conference system including a plurality of user ports switchably interconnected via bearer connections to form a communication network, and a signalling protocol operative between said user ports and a conference control entity to control the bearer connection independently of the topography of the individual bearer connections.

2. A multi-media conference system as claimed in Claim 1, wherein a party control agent is associated with each user port.

3. A multi-media conference system as claimed in Claim 1 or 2, wherein means are provided by which party control agents and the conference control entity can control the establishment and release of individual bearer connections utilising a topography which is dependent upon the availability of replication and/or combining functions.

4. A multi-media conference system as claimed in Claim 3, wherein the replication and/or combining functions are located remotely from the conference control entity and party control agents.

5. A multi-media conference system as claimed in any preceding claim, wherein medium has a bearer connection between the participating users, the bearer connection requiring replication functions if more than one party is a receiver of the medium, and requiring combining functions if more than one party is a transmitter of the medium.

6. A multi-media conference system as claimed in Claim 5, wherein replication and combining functions for a given bearer connection are collocated.

7. A multi-media conference system as claimed in any one of Claims 5 or 6, wherein for a given bearer connection, replication and/or combining functions are centralised at one node of the network (e.g. a conventional audio conference bridge) or distributed through different nodes of the network and/or the terminals of the parties involved.

8. A multi-media conference system as claimed in any preceding claim, wherein different media within the same conference have different bearer connection topologies.

9. A multi-media conference system as claimed in any preceding claim, wherein in order to coordinate the parties in a conference and their participation in the various media involved, there is means providing call control signalling between the parties and the network and between network nodes, which call control signalling is separate from the signalling used to control the individual bearer connections.

10. A multi-media conference system as claimed in Claim 9, wherein the control signalling topology is symmetrical.

11. A multi-media conference system as claimed in Claim 10, wherein the symmetrical topology is a star, with a central conference control entity located in one of the nodes of the network.

12. A multi-media conference system as claimed in Claim 11, wherein the central conference control entity manages the control of bearer connections and where a bearer connection has centralised replication and/or combining functions, a bearer control entity will exist at the node where these functions exist.
